# EUROPEAN PATENT APPLICATION

(11) **EP 3 339 933 A1**
(43) Date of publication of application: **27.06.2018**
(21) Application number: 15901486.9
(22) Date of filing: 19.08.2015
(51) Int. Cl.: G02B 27/01

(54) **WEARABLE DISPLAY DEVICE**

(71) Applicant: Shenzhen Royole Technologies Co., Ltd., Shenzhen, Guangdong 518172 (CN)
(72) Inventor: YANG, Songling, Shenzhen Guangdong 518052 (CN); JIANG, Chao, Shenzhen Guangdong 518052 (CN); CHEN, Songya, Shenzhen Guangdong 518052 (CN); YU, Linwei, Shenzhen Guangdong 518052 (CN); YANG, Fan, Shenzhen Guangdong 518052 (CN); XIA, Xinyuan, Shenzhen Guangdong 518052 (CN)
(74) Representative: Hamer, Christopher K.
(86) International application number: PCT/CN2015/087565
(87) International publication number: WO 2017/028282

(57) **Abstract**

A wearable display apparatus includes a headphone device, a display device, and a connection element. The headphone device includes two headphone bodies. The display device includes a housing and an optical display module arranged within the housing. The housing includes two end regions respectively adjacent to the two headphone bodies, a middle region arranged between the two end regions, and a connection portion arranged at the middle region. The connection element includes a main body and two distal ends respectively extending from two opposite sides of the main body. The two distal ends are respectively connected to the two headphone bodies. The main body is at least partially connected to the connection portion. For the wearable display device, the display device is connected to the headphone device via the connection element, and the connection portion of the display device is arranged at the middle region of the housing. When a user wears the wearable display apparatus and applies a force to separate the headphone bodies from each other, the two distal ends of the display device are not connected to the connection element, thus portions of the connection element corresponding to the two end regions further provide a deformation space for separating the two headphone bodies from each other.

## Description

### TECHNICAL FIELD

The disclosure relates to the technical field of wearable apparatuses, and particularly relates to a wearable display apparatus.

### BACKGROUND

Wearable display apparatuses, also known as head mounted displays, video glasses, glasses type displays, portable cinemas, can play multimedia files which includes 3D videos and so on. The wearable display apparatuses take advantage of near-eye technology to realize the effect of an immersive cinema, and make the concept of portable home theatre productized.

In the related art, for the wearable display apparatus, particular for an immersive wearable display apparatus, a display device is integrally connected to a headphone device. That is, connection portions respectively extend from two ends of a main body of the display device and extend toward corresponding earphone bodies to be connected to the headphone device, thus the shape of the main body of the display device is relatively fixed. However, different users have different width of face, so it needs to provide a deformation space along an axis extending through the left and right headphone bodies. However, the shape of the main body of the display device which houses necessary components is fixed, thus deformation cannot be provided. According to this, in the related art, the connection portions extending from the two ends of the main body of the display device are set to be elastic to provide a certain deformation. However, the main body of the display device needs to cover two eyes of a user, so the lateral (a direction along an axis extending through the left and right headphone bodies) length is substantially close to a distance between the two headphone bodies of the headphone device, the connection portions are relatively limited, and the lateral deformation provided by the connection portions is relatively limited. When a force which is exerted on the two headphone bodies to separate the two headphone bodies is large, two ends of the connection portions respectively connected to the display device exert an expanded and twisting force on the display device, and the force produces some damage to the display device.

According to the description above-mentioned, what is needed is to provide a wearable display apparatus to effectively solve the above technical problems.

### SUMMARY

The purpose of the present disclosure provides a wearable display apparatus to solve the problems in the above related art.

The present disclosure provides a wearable display apparatus which includes a headphone device, a display device, and a connection element. The headphone device includes two headphone bodies. The display device includes a housing and an optical display module within the housing. The housing includes two end regions respectively adjacent to the two headphone bodies, a middle region arranged between the two end regions, and a connection portion arranged at the middle region. The connection element includes a main body and two distal ends respectively extending from two opposite sides of the main body. The two distal ends are respectively connected to the two headphone bodies, and the main body is at least partially connected to the connection portion.

The present disclosure further provides a wearable display apparatus which includes two earphone bodies, a connection element, and a display device. The two headphone bodies define an axis direction extending through the two headphone bodies. The connection element is connected to the two headphone bodies and is elastic to make the two headphone bodies get close to or get away from each other. The display device is fixedly attached to the connection element and projects images in a direction pointing at the two headphone bodies. Two ends of the display device adjacent to the two headphone bodies in the axis direction are separable from the connection element.

The embodiment of the present disclosure provides the wearable display apparatus. The display device is connected to the headphone device via the connection element, and the connection portion of the display device is located at the middle region of the housing. When a user wears the wearable display apparatus and exerts a force to separate the two headphone bodies from each other, the two end regions of the display device are not connected to the connection element. Thus, portions of the connection element corresponding to the two end regions disperse the force acting on the display device by separating the headphone bodies.

### BRIEF DESCRIPTION OF THE DRAWINGS

FIG. 1 is a top view of a wearable display apparatus in accordance with an embodiment of the present disclosure.
FIG. 2 is a top view of a wearable display apparatus in accordance with an embodiment of the present disclosure, showing the wearable display apparatus in an expanded state.
FIG. 3 is a schematic view of a display device of FIG. 1.

### DETAILED DESCRIPTION

In order to make purposes, technical solutions, and advantages of the present disclosure clearer, the following will further illustrate the present disclousre in combination with various embodiments and the accompanying drawings. It should be understood that the specific embodiments described herein are merely used to illustrate the present disclosure, and are not a limitation of the present disclosure.

In the description of the present disclosure, the "first", "second" are merely used for description, and cannot be understood to indicate or imply relative importance or implicitly indicate the number of the indicated technical features. Therefore, features with a limitation of "first" or "second" can explicitly or implicitly include one or more features. In the description of the present disclosure, "multiple" means two or more than two, unless there is a specific limitation.

In the description of the present disclosure, it should be noted that, unless explicitly stated or limited, the terms "mount", "connected" and "connection" should be broadly understood, for example, it may be a fixed connection, or may be a detachable connection, or an integral connection; it may be a mechanical connection, or may be an electrical connection, or may be communication with each other; it may be directly connected, or may be indirectly connected via intermediary, or may be communication between interiors of two elements or interactions between two elements. Those skilled in the art can understand the specific definition of above terms in the present disclosure according to specific conditions.

The following disclosure provides many different embodiments or examples to realize different structures of the present disclosure. For simplifying the disclosure of the present disclosure, components and settings of specific examples are described below. Certainly, they are just examples, and are not intended to limit the present disclosure. Additionally, in the present disclosure, reference numerals and/or reference letters may be repeated in different embodiments. This repetition is for the purpose of simplicity and clarity, and does not indicate relationships among various embodiments and/or settings discussed herein. Additionally, the present disclosure provides examples for various specific processes and materials, but a person ordinary skilled in the art can realize the application of other processes and/or the use of other materials.

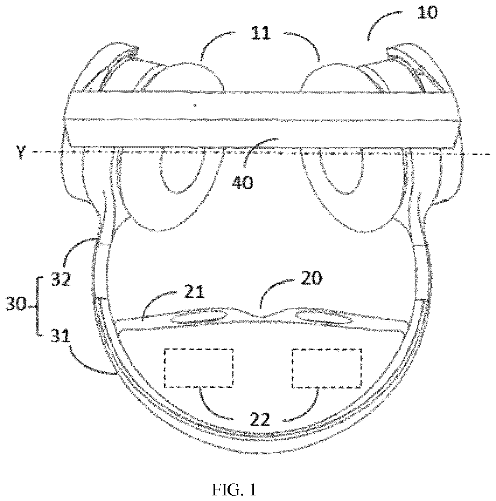

Referring to FIGS. 1-3, FIGS. 1-3 are schematic views of a wearable display apparatus according to an embodiment of the present disclosure. The wearable display apparatus includes a headphone device 10, a display device 20, and a connection element 30. The headphone device 10 includes two headphone bodies 11 which define an axis direction Y extending through the two headphone bodies 11. The display device 20 includes a housing 21 and an optical display module 22 arranged within the housing 21. The housing 21 includes two end regions 211 adjacent to the two headphone bodies 11 respectively, a middle region 212 arranged between the two end regions 211, and a connection portion 213 arranged at the middle region 212. The connection element 30 includes a main body 31 and two distal ends 32 extending from two opposite sides of the main body 31 respectively. The two distal ends 32 are respectively connected to the two headphone bodies 11. The main body 31 is at least partially connected to the connection portion 213. The connection element 30 is elastically deformable to change a distance between the two distal ends 32, so as to make the two headphone bodies 11 respectively connected to the two distal ends 32 get close to or get away from each other.

In the embodiment of the present disclosure, the display device 20 of the wearable display apparatus is connected to the headphone device 10 via the connection element 30, and the connection portion 213 of the display device 20 is arranged at the middle region 212 of the housing 21, i.e., two ends of the display device 20 adjacent to the two earphone bodies 11 in the axis direction Y are detachable from the connection element 30. In the embodiment, the two ends of the display device 20 correspond to the two end regions 211. In other embodiments, according to different connecting manners in which the connection portion 213 is fixed to the connection element 30, the middle region 212 may further have an unfixed region, and the two ends of the display device 20 further include the unfixed region of the middle region 212. When a user wears the wearable display device 1 and exerts a force to separate the two headphone bodies 11 from each other, the two end regions 211 of the display device 20 are not connected to the connection element 30. Thus, portions of the connection element 30 corresponding to the two end regions 211 further provide a deformation space for separating the headphone bodies 11 from each other.

The display device 20 is fixed to the connection element 30 and projects images in a direction pointing at the two headphone bodies 11. Specifically, the housing 21 of the wearable display apparatus includes a display front side 21A having watch windows 216, and a housing outside 21B opposite to the display front side 21A. The watch window 216 is used for providing image content provided by the optical display module 22 within the housing 21. The connection portion 213 is arranged in a middle region 212B of the housing outside 21B, i.e., arranged at a side away from the two headphone bodies 11. In the embodiment, the display device 20 includes two sets of the optical display module 22 to respectively provide display content watched by two eyes of the user. Specifically, each set of the optical display modules 22 includes a set of micro display device and optical module (not shown). Images generated by the micro display devices are respectively projected in a preset direction from the watch windows 216 to the left eye and the right eye of the user through the corresponding optical modules. Thus, the user can see magnified virtual images of the display content provided by the micro display devices. In other embodiments, the optical display module may include a set of micro display devices, that is, a single display source, and the image generated by the micro display device is respectively projected in projection directions to the left eye and the right eye of the user through two sets of the optical modules.

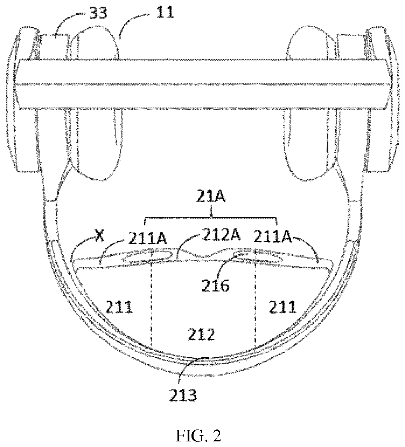

In the embodiment, the housing 21 further includes a housing top side 21C and a housing bottom side (not shown) which form a sealed housing space, The two end regions 211 include two end regions 211A of the display front side 21A adjacent to the two headphone bodies respectively, two end regions 211B of the housing outside 21B adjacent to the two headphone bodies respectively, two end regions 211C of the housing top side 21C adjacent to the two headphone bodies respectively, and two end regions (not shown) of the housing bottom side (not shown) adjacent to the two headphone bodies respectively. The middle region 212 includes a middle region 212A of the display front side 21A, the middle region 212B of the housing outside 21B, a middle region 212C of the housing top side 21C, and a middle region of the housing bottom side. Specifically, the connection element 30 covers the housing outside 21B. The connection portion 213 is arranged at the middle region 212B of the housing outside 21B, that is, the two end regions 211B of the housing outside 21B are not connected to the connection element 30, so that the connection element 30 made of an elastic material has a larger deformable region. The connection portion 213 can be connected to the connection element 30 in pasting, riveting, snap-fit structure, magnetic adsorption, pivoting junction and so on or a combination of the above manners. Since the above connecting manners are well known to a person skilled in the art, they will not be repeated herein. As shown in FIG. 1, in a natural state, i.e., when there is no force exerted on the wearable display apparatus, the connection element 30 is in an original state. In the embodiment, in the original state, the connection element 30 is attached to the middle region 212B and the two end regions 211B of the housing outside 21B. When a force is exerted to separate the two headphone bodies 11 from each other, as shown in FIG. 2, portions of the connection element 30 corresponding to the two end regions 211B is changed from the original state to an expanded state in which the portions of the connection element 30 are away from the two end regions 211B. In the embodiment, in the expanded state, a certain reserved space X is defined between the connection element 30 and sides of the two end regions 211 adjacent to the headphone bodies 11, such that an elastic space for separating the headphone bodies 11 from each other is provided, thereby accommodating users having different head widths. The connection element 30 is made of a deformable and elastic material, thus when the user wears the wearable display apparatus, the connection element 30 can provide a clamping force to make the two headphone bodies 11 get close to each other to stabilize the state when the wearable display apparatus is worn.

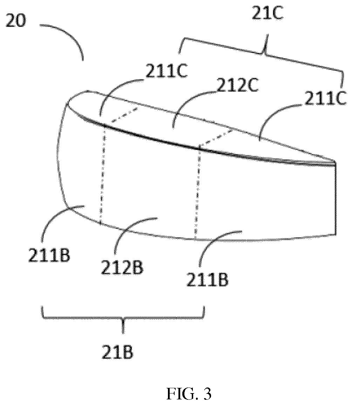

It could be understood that, in other embodiments, when the wearable display apparatus is in the natural state, a certain reserved space is defined between the connection element 30 and the two end regions 211 at the side of the housing 21 where the connection portion 213 is located, that is, the connection element 30 and the two end regions 211 are not attached to each other. Additionally, it should be noted that, the partition and the proportion of the middle region 212 and the two end regions 211 are not limited to these shown in FIG. 2 and FIG. 3. What is needed is just that the two opposite ends of the display device 20 respectively adjacent to the two headphone bodies 11 are not fixedly connected to the connection element 30. At this point compared with a case in which the two end regions 211 are fixedly connected to the connection element 30, the connection element 30 has a larger deformable space.

Preferably, the wearable display apparatus further includes a head mounted bracket 40 connected to the two headphone bodies 11. The head mounted bracket 40 and the headphone bodies 11 constitute a form similar to a headphone. The two distal ends 32 of the connection element 30 are rotatably connected to corresponding headphone bodies 11 respectively. Specifically, each of the two distal ends 32 of the connection element 30 includes a rotation ring 33 connected to a corresponding headphone body 11. The rotation ring 33 and the headphone body 11 can be correspondingly provided with tooth structures or hinged structures which can be engaged with each other and rotated relative to each other to realize rotation connection. Thus the headphone is rotatable relative to the display device 20 via the connection element 30. When the headphone is rotated approximately 90 degrees, i.e., the headphone is worn correctly, the display device 20 is positioned in front of the eyes of the user. The two eyes can watch image content provided by the optical display module 22 within the housing 21 respectively through corresponding watch windows 216. In other embodiments, when the wearable display apparatus is worn correctly, an angle defined between the display device 20 and the head mounted bracket 40 can be flexibly set according to different forms of the headphone. When the headphone and the display device 20 are rotated to be folded to be in an overlapped state, that is, the head mounted bracket 40 and the display device 20 overlap each other, the volume of the space occupied by the product relatively decreases, thus it is convenient for the user to store and carry the wearable display apparatus. Additionally, in other embodiments, each distal end 32 further includes a retractable structure, so that the user can adjust the distance between the display device 20 and the eyes of the user.

In other embodiments, the connection portion 213 can be arranged at the middle region 212A of the display front side 21A of the housing, the specific position can be flexibly set according to the specific product design, as long as the view perspective of the user through the watch window 216 of the display front side 21A is not affected. The connection portion 213 can also be arranged at the middle region 212C of the housing top side 21C, the middle region of the housing bottom side, and also arranged both at the housing top side 21C and the housing bottom side. Thus the connection element 30 can be two connection belts. The connection element 30 can also be formed by connecting multiple connection portions arranged at any side of the housing 21 to multiple connection belts. The connection portion 213 also can be arranged at the middle region 212 in the housing 21, thus the connection elements 30 can be arranged in the housing 21 and respectively extend out of lateral sides of the housing 21 and extend toward corresponding headphone bodies 11. It could be understood that, multiple lateral sides may be included according to the specific form of the housing 21. The connection portion 213 is flexibly arranged at the middle region 212 constructed by the multiple lateral sides, as long as the connection portion 213 is not arranged at the two end regions 211 of the display device 20 adjacent to the headphone bodies 11. Thereby, the two end regions 211 of the display device 20 are in a non-connecting state, and the portions of the connection element 30 corresponding to the two end regions 211 expands an available deformation space When the user wears the wearable display device 2 and exerts a force to separate the two headphone bodies 11 from each other, deformation limitation of the connection element 30 generated by the form of the display device 20 can be reduced by partially connecting the connection element 30 to the display device 20.

The foregoing description is only the preferred embodiments of the present disclosure, but is not intended to limit the scope of the disclosure. Accordingly, any modification, alternatives, improvements or the like within the spirit and principles of the present disclosure should be included in the scope of the present disclosure.

## Claims

1. A wearable display apparatus, comprising:
a headphone device comprising two headphone bodies;
a display device comprising a housing and an optical display module arranged within the housing, the housing comprising two end regions respectively adjacent to the two headphone bodies, a middle region arranged between the two end regions, and a connection portion arranged at the middle region; and
a connection element comprising a main body and two distal ends respectively extending from two opposite sides of the main body, the two distal ends being respectively connected to the two headphone bodies, and the main body being at least partially connected to the connection portion.

2. The wearable display apparatus of claim 1, further comprising a head mounted bracket connected to the two headphone bodies.

3. The wearable display apparatus of claim 1 or claim 2, wherein the two distal ends of the connection element are respectively and rotatably connected to the two headphone bodies.

4. The wearable display apparatus of claim 1, wherein the housing comprises a display front side having watch windows and a housing outside opposite to the display front side, the watch window is for providing image content generated by the optical display module within the housing, and the connection portion is arranged at a middle region of the housing outside.

5. The wearable display apparatus of claim 4, wherein the connection element covers the housing outside.

6. The wearable display apparatus of claim 1, wherein a reserved space is defined between the connection element and sides of the two end regions adjacent to the headphone bodies.

7. The wearable display apparatus of claim 1, wherein the connection element is elastically deformable to adjust a distance between the two distal ends.

8. A wearable display apparatus, comprising:
two headphone bodies defining an axis direction extending through the two headphone bodies;
a connection element connected to the two headphone bodies, the connection element being elastic to make the two headphone bodies get close to or get away from each other; and
a display device fixedly attached to the connection element and projecting image in a direction pointing at the two headphone bodies, two ends of the display device adjacent to the two headphone bodies in the axis direction are separable from the connection element.

9. The wearable display apparatus of claim 8, wherein the display device comprises a watch window for projecting images therethrough and a housing outside facing away from the watch window, and the connection element is fixed to the housing outside.

10. The wearable display apparatus of claim 9, wherein the connection element is arranged at a side of the housing outside away from the two headphone bodies.

11. The wearable display apparatus of claim 8, wherein a reserved space is defined between the connection element and the two ends of the display device adjacent to the two headphone bodies along the axis direction.

12. The wearable display apparatus of claim 8, further comprising a head mounted bracket connected to the two headphone bodies.

13. The wearable display apparatus of claim 8 or claim 12, wherein the connection element comprises two rotation rings respectively and rotatably connected to the two headphone bodies.
